# EUROPÄISCHE PATENTSCHRIFT

(11) **EP 4 295 733 B1**
(45) Veröffentlichungstag und Bekanntmachung des Hinweises auf die Patenterteilung: **10.12.2025**
(21) Anmeldenummer: 23175427.6
(22) Anmeldetag: 25.05.2023
(51) Int. Cl.: A47J 31/46, F24C 15/32, F04C 2/32

(54) **FLÜSSIGKEITSFÜHRENDES GERÄT ZUM ZUBEREITEN VON SPEISEN UND/ODER GETRÄNKEN ODER ZUM REINIGEN EINES ZU REINIGENDEN GUTES SOWIE PUMPE FÜR EIN FLÜSSIGKEITSFÜHRENDES GERÄT**
LIQUID-CONDUCTING DEVICE FOR PREPARING FOOD AND/OR BEVERAGES OR FOR CLEANING A MATERIAL TO BE CLEANED AND PUMP FOR A LIQUID-CONDUCTING DEVICE
APPAREIL DE TRANSPORT DE LIQUIDE POUR PRÉPARER DES ALIMENTS ET/OU DES BOISSONS OU POUR NETTOYER UN PRODUIT À NETTOYER AINSI QUE POMPE POUR UN APPAREIL DE TRANSPORT DE LIQUIDE

(30) Priorität: 23.06.2022 BE 202205496
(43) Veröffentlichungstag der Anmeldung: 27.12.2023
(73) Patentinhaber: Miele & Cie. KG, 33332 Gütersloh (DE)
(72) Erfinder: Topmöller, Bastian, 33442 Herzebrock-Clarholz (DE); Seidel, Fabian, 33615 Bielefeld (DE)

(56) Entgegenhaltungen:
- EP-A1- 3 569 933
- GB-A- 115 137
- GB-A- 729 281
- JP-A- 2010 054 096

## Beschreibung

Flüssigkeitsführendes Gerät zum Zubereiten von Speisen und/oder Getränken oder zum Reinigen eines zu reinigenden Gutes sowie Pumpe für ein flüssigkeitsführendes Gerät Die Erfindung betrifft ein flüssigkeitsführendes Gerät zum Zubereiten von Speisen und/oder Getränken oder zum Reinigen eines zu reinigenden Gutes sowie eine Pumpe für ein flüssigkeitsführendes Gerät.

Derartige flüssigkeitsführende Geräte zum Zubereiten von Speisen und/oder Getränken oder zum Reinigen eines zu reinigenden Gutes sowie Pumpen für diese flüssigkeitsführenden Geräte sind bereits aus dem Stand der Technik in einer Vielzahl von Ausführungsformen vorbekannt. Beispielsweise aus den Druckschriften EP 3 569 933 A1, GB 729 281 A, GB 115 137 A und JP 2021 054096 A.

Die bekannten flüssigkeitsführenden Geräte umfassen dabei beispielsweise eine Flüssigkeitsleitung, einen Vorlagebehälter, einen mit dem Vorlagebehälter strömungsleitend verbundenen Behandlungsraum und eine mittels einer Steuerung des flüssigkeitsführenden Geräts ansteuerbare Pumpe, wobei die Flüssigkeitsleitung und der Vorlagebehälter jeweils mit der Pumpe strömungsleitend verbunden sind, und wobei die Pumpe einerseits zur Förderung von in der Flüssigkeitsleitung und/oder in einem mit der Flüssigkeitsleitung strömungsleitend verbundenen Flüssigkeitsreservoir befindlicher Flüssigkeit zu dem Vorlagebehälter und andererseits zur Förderung von in dem Vorlagebehälter befindlicher Flüssigkeit zu der Flüssigkeitsleitung oder dem Flüssigkeitsreservoir ausgebildet ist. Die Pumpe ist also in zwei Förderrichtungen betreibbar.

Der Erfindung stellt sich somit das Problem, ein flüssigkeitsführendes Gerät zum Zubereiten von Speisen und/oder Getränken oder zum Reinigen eines zu reinigenden Gutes und eine Pumpe für ein flüssigkeitsführendes Gerät zu verbessern.

Erfindungsgemäß wird dieses Problem durch ein flüssigkeitsführendes Gerät zum Zubereiten von Speisen und/oder Getränken oder zum Reinigen eines zu reinigenden Gutes mit den Merkmalen des Patentanspruchs 10 gelöst. Ferner wird dieses Problem durch eine Pumpe für ein flüssigkeitsführendes Gerät zum Zubereiten von Speisen und/oder Getränken oder zum Reinigen eines zu reinigenden Gutes mit den Merkmalen des Patentanspruchs 1 gelöst.

Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein flüssigkeitsführendes Gerät zum Zubereiten von Speisen und/oder Getränken oder zum Reinigen eines zu reinigenden Gutes und eine Pumpe für ein flüssigkeitsführendes Gerät verbessert sind. Bei der Flüssigkeit kann es sich insbesondere um Wasser oder wasserbasierte Flüssigkeiten und Flüssigkeitsgemische handeln. Denkbar sind jedoch auch Flüssigkeiten mit einem gewissen Anteil von Feststoffen oder Gasen. Das flüssigkeitsführende Gerät zum Zubereiten von Speisen und/oder Getränken oder zum Reinigen eines zu reinigenden Gutes kann als ein Haushaltsgerät oder als ein Gerät für die professionelle Verwendung ausgebildet sein.

Neben Gargeräten, wie beispielsweise Backöfen, Dampfgarern oder Kombinationsgargeräten, sind auch Geräte für die Zubereitung von Getränken, wie beispielsweise Kaffeemaschinen, und Reinigungsgeräte, wie beispielsweise Waschmaschinen oder Spülmaschinen, denkbar. Diese Aufzählung ist jedoch nicht abschließend. Die Pumpe des erfindungsgemäßen flüssigkeitsführenden Geräts weist beispielsweise einen elektromotorischen Antrieb auf. Jedoch sind auch andere geeignete Antriebe der Pumpe möglich. Aufgrund der Möglichkeit, mittels der Pumpe Flüssigkeit sowohl von der Flüssigkeitsleitung und/oder einem mit der Flüssigkeitsleitung strömungsleitend verbundenen Flüssigkeitsreservoir zu dem Vorlagebehälter, wie auch in die Gegenrichtung, also von dem Vorlagebehälter zu der Flüssigkeitsleitung, zu fördern, ist darüber hinaus der konstruktive Aufbau des erfindungsgemäßen flüssigkeitsführenden Geräts vereinfacht. Ferner ist das erfindungsgemäße Gerät durch den Verzicht auf beispielsweise eine zusätzliche Pumpe für die Förderung in die Gegenrichtung platzsparend und damit kompakt und kostengünstig realisierbar. Anderenfalls wäre es, wie im Stand der Technik üblich, lediglich möglich, die in dem Vorlagebehälter befindliche Flüssigkeit in zusätzlichen Prozessschritten des flüssigkeitsführenden Geräts vollständig zu verdampfen oder in den Behandlungsraum zu fördern und dann entweder zu verdampfen oder über eine in dem Behandlungsraum vorhandene Ablauföffnung aus dem flüssigkeitsführenden Gerät auszuschleusen.

Darüber hinaus ist es mittels der erfindungsgemäßen Ausbildung des flüssigkeitsführenden Geräts möglich, in dem Vorlagebehälter befindliche Flüssigkeit, beispielsweise Restwasser oder Flüssigkeit zur Durchführung eines Entkalkungsvorgangs in dem flüssigkeitsführenden Gerät, mittels der Pumpe im Wesentlichen vollständig aus dem Vorlagebehälter abzupumpen. Entsprechend ist es auch möglich, bei dem vorgenannten Entkalkungsvorgang gelöste Kalkpartikel auf dem vorgenannten Weg, also lediglich mittels der Pumpe und damit ohne zusätzliche Maßnahmen, aus dem erfindungsgemäßen flüssigkeitsführenden Gerät im Wesentlichen vollständig auszuschleusen.

Grundsätzlich ist das erfindungsgemäße flüssigkeitsführende Gerät in weiten geeigneten Grenzen frei wählbar. Siehe hierzu beispielsweise die diesbezüglichen Ausführungen in der Beschreibungseinleitung. Entsprechendes gilt für die Pumpe des flüssigkeitsführenden Geräts, die nach Art, Funktionsweise, Material, Dimensionierung, Anordnung, Antrieb und Betriebsweise grundsätzlich in weiten geeigneten Grenzen frei wählbar ist.

Eine vorteilhafte Weiterbildung des erfindungsgemäßen flüssigkeitsführenden Geräts sieht vor, dass die Pumpe oberhalb des Vorlagebehälters angeordnet ist, bevorzugt, dass die strömungsleitende Verbindung zwischen der Pumpe und dem Vorlagebehälter siphonartig ausgebildet ist, besonders bevorzugt, dass die vorgenannte strömungsleitende Verbindung derart ausgebildet ist, dass deren Siphonfunktion in jedem Betriebszustand des flüssigkeitsführenden Geräts gewährleistet ist. Auf diese Weise ist eine Verhinderung eines ungewünschten Rückflusses von in dem Vorlagebehälter befindlicher Flüssigkeit in die Pumpe und damit in die mit der Pumpe strömungsleitend verbundene Flüssigkeitsleitung wirksam verhindert. Dies gilt besonders für die bevorzugte und insbesondere für die besonders bevorzugte Ausführungsform dieser Weiterbildung. Die Siphonfunktion hat darüber hinaus den weiteren Vorteil, dass mittels der in dem Vorlagebehälter und in der strömungsleitenden Verbindung zwischen dem Vorlagebehälter und der Pumpe befindlichen Flüssigkeit eine Gas-/Dampfsperre auf konstruktiv und fertigungstechnisch einfache Art realisiert ist.

Die erfindungsgemäße Pumpe ist als eine Rollkolbenpumpe ausgebildet, umfassend ein Gehäuse, einen in dem Gehäuse bewegbar angeordneten Verdrängerkörper zur Förderung eines zwischen dem Gehäuse und dem Verdrängerkörper befindlichen Fluids und einen in dem Verdrängerkörper um eine Rotationsachse drehbar angeordneten und mittels eines Antriebs der Pumpe automatisch antreibbaren Exzenter. Mittels der als Rollkolbenpumpe ausgebildeten Pumpe ist die Pumpe des erfindungsgemäßen flüssigkeitsführenden Geräts auf sehr einfache Art und Weise sowie sehr kostengünstig und langlebig ausgeführt. Insbesondere die strömungsleitende Verbindung zwischen der Pumpe und dem Vorlagebehälter ist mittels der als Rollkolbenpumpe ausgebildeten Pumpe ohne zusätzliche Maßnahmen, beispielsweise ohne zusätzliche Ventile oder dergleichen zwecks Herstellung der vorgenannten Gas-/Dampfsperre, realisierbar. Ferner ist eine als Rollkolbenpumpe ausgebildete Pumpe leicht in beide Drehrichtungen und damit leicht in beide Förderrichtungen betreibbar. Rollkolbenpumpen werden auch als Sperrschieberpumpen bezeichnet und sind im Vergleich zu anderen Pumpenarten, insbesondere auch aufgrund der geringen Anzahl an Bauteilen, im Wesentlichen wartungsfrei und sehr kompakt.

Eine besonders vorteilhafte Weiterbildung der erfindungsgemäßen Pumpe sieht vor, dass der Antrieb der Pumpe als ein mittels der Steuerung des flüssigkeitsführenden Geräts ansteuerbarer bürstenloser Antrieb ausgebildet ist. Hierdurch ist die Ansteuerung der Pumpe sehr einfach realisierbar, da bei bürstenlosen Motoren das Drehfeld der Spannung synchron zu der Drehzahl des Rotors ist, so dass das Drehfeld gemessen und eine Drehzahlregelung elektronisch erfolgen kann. Mittels des bürstenlosen Antriebs der Pumpe ist somit beispielsweise eine sehr genaue Dosierung der Flüssigkeitszufuhr in den Vorlagebehälter ermöglicht.

Eine weitere vorteilhafte Weiterbildung der erfindungsgemäßen Pumpe sieht vor, dass die Pumpe derart ausgebildet ist, dass die Pumpe trocken ansaugen kann. Auf diese Weise ist ein Ansaugen von Gas und/oder Dampf mittels der erfindungsgemäßen Pumpe unproblematisch. Mittels der für die erfindungsgemäße Pumpe gewählten Bauart einer Rollkolbenpumpe ist dies sehr leicht umsetzbar.

Eine andere vorteilhafte Weiterbildung der erfindungsgemäßen Pumpe sieht vor, dass die Pumpe zumindest teilweise aus Kunststoff ausgebildet ist, bevorzugt, dass der Exzenter und/oder der Verdrängerkörper und/oder das Gehäuse aus Kunststoff ausgebildet sind/ist. Hierdurch ist die Konstruktion und die Fertigung der erfindungsgemäßen Pumpe weiter vereinfacht und damit kostengünstiger realisierbar. Selbstverständlich sind für die jeweiligen Bauteile voneinander verschiedene Kunststoffe denkbar, so dass für das jeweilige Bauteil und dessen Funktion der geeignete Kunststoff auswählbar ist. Die Ausbildung der vorgenannten Bauteile der Pumpe aus Kunststoff ist beispielsweise auch hinsichtlich der Lebensmittelkonformität von Vorteil.

Die erfindungsgemäße Pumpe sieht vor, dass der Exzenter der Pumpe als ein in einem Schnitt senkrecht zur Rotationsachse nicht kreisförmiger Exzenter ausgebildet ist, bevorzugt, dass der Exzenter in diesem Schnitt nockenartig ausgebildet ist, besonders bevorzugt, dass der Exzenter in diesem Schnitt eine erste Kontaktfläche und eine von der ersten Kontaktfläche beabstandete zweite Kontaktfläche aufweist, wobei der Exzenter derart ausgebildet ist, dass der Exzenter in einer ersten Drehrichtung lediglich mit der ersten Kontaktfläche und in einer zweiten Drehrichtung lediglich mit der zweiten Kontaktfläche mit dem Verdrängerkörper in Kraftübertragungskontakt ist. Auf diese Weise ist der Exzenter der erfindungsgemäßen Pumpe auf den jeweiligen Einzelfall speziell angepasst ausbildbar, so dass sich beispielsweise eine spezielle Kontaktgeometrie zwischen dem Exzenter auf der einen Seite und dem Verdrängerkörper auf der anderen Seite ergibt. Dies gilt insbesondere für die bevorzugte Ausführungsform dieser Weiterbildung. Die besonders bevorzugte Ausführungsform dieser Weiterbildung hat darüber hinaus den weiteren Vorteil, dass der Exzenter bei dessen Drehung in beide Drehrichtungen nicht immer mit der gleichen Kontaktfläche mit dem Verdrängerkörper in kraftübertragenden Kontakt ist, so dass der Verschleiß des Exzenters deutlich reduziert ist.

Eine vorteilhafte Weiterbildung der vorgenannten Weiterbildung der erfindungsgemäßen Pumpe sieht vor, dass die erste und die zweite Kontaktfläche jeweils derart dimensioniert sind, dass eine Flächenpressung zwischen dem Exzenter und dem Verdrängerkörper in beiden Drehrichtungen des Exzenters in Abhängigkeit der zwischen dem Exzenter und dem Verdrängerkörper zu übertragenden Kraft und in Abhängigkeit der Dimensionierung der Pumpe minimiert ist. Hierdurch ist der Verschleiß bei dem Exzenter zusätzlich reduziert, so dass insbesondere der Exzenter aber auch der Verdrängerkörper aus einem Material mit geringerer Festigkeit hergestellt werden können. Entsprechend ist beispielsweise auch die Auswahl an für den Exzenter und/oder den Verdrängerkörper geeigneten Kunststoffen wesentlich vereinfacht.

Die erfindungsgemäße Pumpe sieht vor, dass der Exzenter, der Verdrängerkörper und das Gehäuse derart aufeinander abgestimmt dimensioniert sind, dass der Exzenter mit einem vorher festgelegten Spiel relativ zu dem Verdrängerkörper drehbar ist. Auf diese Weise ist es beispielsweise möglich, trotz in der Flüssigkeit vorhandener Feststoffe wie Kalk oder dergleichen, den Verdrängerkörper und das Gehäuse der Pumpe ohne elastische Beschichtungen oder dergleichen auszuführen. Die Gesamtheit der vorgenannten Bauteile der Pumpe verfügt auch ohne zusätzliche Maßnahmen selbst über genügend Spiel, um auch unter widrigen Betriebsbedingungen, wie beispielsweise von in der Flüssigkeit enthaltenen Feststoffen, ordnungsgemäß zu funktionieren. Ferner ermöglicht das vorgenannte Spiel in der Konstruktion der erfindungsgemäßen Pumpe größere Toleranzen bei der Fertigung der einzelnen Bauteile der erfindungsgemäßen Pumpe, so dass deren Herstellung kostengünstiger ist. Beispielsweise ist dadurch die Verwendung von Kunststoff anstelle von Metall für den Exzenter und/oder den Verdrängerkörper und/oder dem Gehäuse ermöglicht, zumindest jedoch begünstigt.

Die erfindungsgemäße Pumpe sieht vor, dass die Pumpe derart ausgebildet ist, dass bei einer Drehung des Exzenters ein Kraftübertragungskontakt zwischen dem Exzenter und dem Verdrängerkörper im Vergleich zu einem Kraftübertragungskontakt zwischen dem Verdrängerkörper und dem Gehäuse, bezogen auf eine Drehrichtung der Drehung, um einen Vorlaufwinkel vorlaufend ist, bevorzugt, dass der Vorlaufwinkel einen Wert von größer 0° und kleiner 90°, besonders bevorzugt, dass der Vorlaufwinkel einen Wert von größer 50° und kleiner 70°aufweist. Hierdurch ist beispielsweise das vorgenannte Spiel in der erfindungsgemäßen Pumpe auf konstruktiv und fertigungstechnisch besonders einfache Art und Weise realisierbar. Dies gilt insbesondere für die bevorzugte Ausführungsform dieser Weiterbildung.

Eine vorteilhafte Weiterbildung der letztgenannten Weiterbildung der erfindungsgemäßen Pumpe sieht vor, dass der vorgenannte Kraftübertragungskontakt zwischen dem Exzenter und dem Verdrängerkörper auf der einen Seite und der vorgenannte Kraftübertragungskontakt zwischen dem Verdrängerkörper und dem Gehäuse auf der anderen Seite derart zueinander positioniert sind, dass eine Spaltströmung des Fluids zwischen dem Gehäuse und dem Verdrängerkörper minimiert ist. Auf diese Weise sind Spaltströmungen bei der erfindungsgemäßen Pumpe minimiert. Insbesondere ist dies von Vorteil bei der Förderung von gasförmigen Fluiden und für die Trockenlauffähigkeit der erfindungsgemäßen Pumpe.

Der Toleranzausgleich durch die spezielle Exzenterform ermöglicht somit eine gröbere Tolerierung der einzelnen Bauteile der erfindungsgemäßen Pumpe bei gleichzeitigem Erhalt der Ansaugfähigkeit der Pumpe. Der Toleranzausgleich stellt auch bei Abnutzung der Oberflächen bei den vorgenannten Bauteilen enge Spalte und somit ein Ansaugen bei trockener Pumpe sicher. Aus diesen Gründen kann für die wesentlichen Bauteile der erfindungsgemäßen Pumpe Kunststoff als Material gewählt werden. Dadurch können die Herstellkosten gesenkt werden und die Pumpe in OEM-Anwendungen sowie in Haushaltsgeräten eingesetzt werden. Die Verwendung eines bürstenlosen Antriebs ermöglicht eine einfache Regelung der Förderrate. Die Förderung partikelhaltiger Fluide ist ohne flexible Materialien möglich, da durch das Spiel zwischen Exzenter und Verdrängerkörper ein Verklemmen sowie ein übermäßiges Abnutzen der einzelnen Bauteile der erfindungsgemäßen Pumpe verhindert wird. Der Verdrängerkörper hat dabei die Möglichkeit, in dem Fluid enthaltenen Partikeln, also Feststoffen wie Kalk oder dergleichen, auszuweichen.

Ein Ausführungsbeispiel der Erfindung ist in den Zeichnungen rein schematisch dargestellt und wird nachfolgend näher beschrieben. Es zeigt
- Figur 1a: ein Ausführungsbeispiel des erfindungsgemäßen flüssigkeitsführenden Geräts in einer ersten teilweisen, seitlichen Schnittdarstellung,
- Figur 1b: das Ausführungsbeispiel in einer zweiten teilweisen, seitlichen Schnittdarstellung,
- Figur 1c: das Ausführungsbeispiel in einer dritten teilweisen, seitlichen Schnittdarstellung,
- Figur 2a: die Pumpe des Ausführungsbeispiels in einer ersten teilweisen, geschnittenen Seitenansicht,
- Figur 2b: die Pumpe des Ausführungsbeispiels in einer zweiten teilweisen, geschnittenen Seitenansicht,
- Figur 3: den Exzenter der Pumpe des Ausführungsbeispiels in einer perspektivischen Einzeldarstellung und
- Figur 4: die Pumpe des Ausführungsbeispiels in einer dritten teilweisen, geschnittenen Seitenansicht.

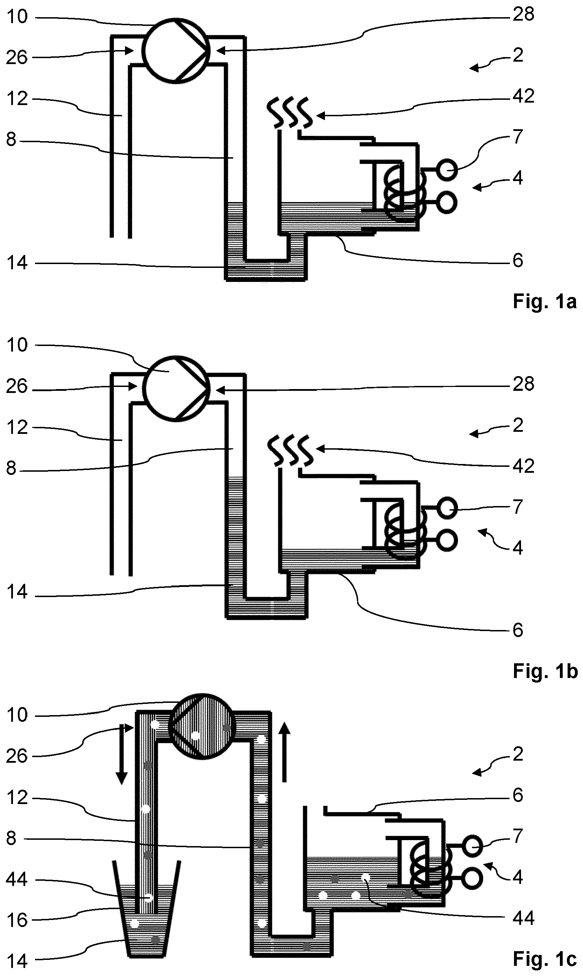

In den Fig. 1a bis 4 ist ein Ausführungsbeispiel des erfindungsgemäßen flüssigkeitsführenden Geräts rein exemplarisch dargestellt.

Das flüssigkeitsführende Gerät 2 ist als ein Backofen für den Haushalt ausgebildet. Der Backofen 2 weist einen als Garraum, nämlich als eine Backmuffel, ausgebildeten, nicht dargestellten Behandlungsraum auf. Für bestimmte Programme für den Betrieb des Backofens 2 ist eine Zufuhr von Wasserdampf erforderlich. Derartige Programme werden beispielsweise für das sogenannte Klimagaren verwendet. Beim Klimagaren wird die Luftfeuchtigkeit im Garraum, also beispielsweise der Backmuffel, während des Garvorgangs angepasst. Dazu wird Wasserdampf erzeugt und während des Garprozesses in den Garraum des Backofens 2 eingeleitet. Klimagaren ist beispielsweise besonders bei lange andauernden Garprozessen von großen Bratenstücken von Vorteil, um das Fleisch vor einem ungewünschten Austrocknen zu schützen. Klimagaren ist ferner bei dem Backen von Brot oder Brötchen vorteilhaft einsetzbar, um ein Aufreißen der Teigoberfläche des Backguts zu verhindern. Um den Wasserdampf zu erzeugen und in die Backmuffel einzuleiten, weist der Backofen 2 bei dem vorliegenden Ausführungsbeispiel einen Verdampfer 4 auf, der mit der Backmuffel mittels einer nicht dargestellten Dampfleitung in Strömungsverbindung steht. Der Verdampfer 4 weist einen als Verdampferraum ausgebildeten Vorlagebehälter 6 für Wasser und eine Heizung 7 für das Verdampfen von in dem Vorlagebehälter 6 befindlichen Wasser auf.

Um das Wasser in den Vorlagebehälter 6 des Verdampfers 4 zu fördern, weist der Backofen 2 eine als Rollkolbenpumpe ausgebildete und mit dem Vorlagebehälter 6 mittels einer Wasserzufuhrleitung 8 strömungsleitend verbundene Pumpe 10 auf, mittels der Wasser 14 durch eine als eine Wasserleitung ausgebildete Flüssigkeitsleitung 12 aus einem mit dem Wasser 14 gefüllten, lediglich in Fig. 1c dargestellten, separaten Wasserreservoir 16 in den Vorlagebehälter 6 des Verdampfers 4 förderbar ist. Das Wasserreservoir 16 ist hier als eine Tasse oder ein Becher ausgebildet. Je nach Bedarf, kann ein Benutzer des Backofens 2 beispielsweise mittels einer nicht dargestellten Benutzerschnittstelle auf dem Fachmann bekannte Weise aufgefordert werden, die mit dem Wasser 14 gefüllte Tasse 16 oder dergleichen in strömungsleitende Verbindung zu der Wasserleitung 12 anzuordnen.

Erfindungsgemäß ist die Pumpe 10 derart mit einem Bodenbereich des Vorlagebehälters 6 strömungsleitend verbunden, dass in dem Vorlagebehälter 6 befindliche Flüssigkeit mittels der Pumpe 10 im Wesentlichen vollständig aus dem Vorlagebehälter 6 abpumpbar ist. Bei dem vorliegenden Ausführungsbeispiel ist die Wasserzufuhrleitung 8 an einer Unterseite des Vorlagebehälters 6 mit dem Vorlagebehälter 6 strömungsleitend verbunden. Siehe hierzu die Fig. 1a bis 1c.

Wie aus den Fig. 1a bis 1c ersichtlich ist, ist die Pumpe 10 oberhalb des Vorlagebehälters 6 angeordnet, wobei die als Wasserzufuhrleitung 8 ausgebildete strömungsleitende Verbindung zwischen der Pumpe 10 und dem Vorlagebehälter 6 siphonartig ausgebildet ist, nämlich derart, dass die vorgenannte strömungsleitende Verbindung 8 derart ausgebildet ist, dass deren Siphonfunktion in jedem Betriebszustand des flüssigkeitsführenden Geräts 2 gewährleistet ist.

Die Pumpe 10 wird mittels eines als Elektromotor ausgebildeten, nicht dargestellten Antriebs auf dem Fachmann bekannte Weise automatisch angetrieben. Hierfür ist der Elektromotor mit einer ebenfalls nicht dargestellten Steuerung des Backofens 2 signalübertragend und leistungsübertragend verbunden. Die Signalübertragungsverbindung kann dabei direkt oder indirekt erfolgen. Ferner sind sowohl drahtgebundene wie auch drahtlose Signalübertragungsverbindungen möglich. Der Elektromotor ist dabei als ein integraler Bestandteil der Pumpe 10 und als ein mittels der Steuerung des flüssigkeitsführenden Geräts 2 ansteuerbarer bürstenloser Antrieb ausgebildet. Mittels der Steuerung ist der Elektromotor der Pumpe 10 in einem ersten Betriebsmodus des Elektromotors zur Förderung des Wassers 14 von der Wasserleitung 12, und damit von dem Wasserreservoir 16, zu dem Vorlagebehälter 6 und in einem zweiten Betriebsmodus des Elektromotors zur Förderung des Wassers 14, mit oder ohne zusätzliche gasförmige, flüssige oder feste Bestandteile, von dem Vorlagebehälter 6 zu der Wasserleitung 12, und damit zu dem Wasserreservoir 16, ansteuerbar.

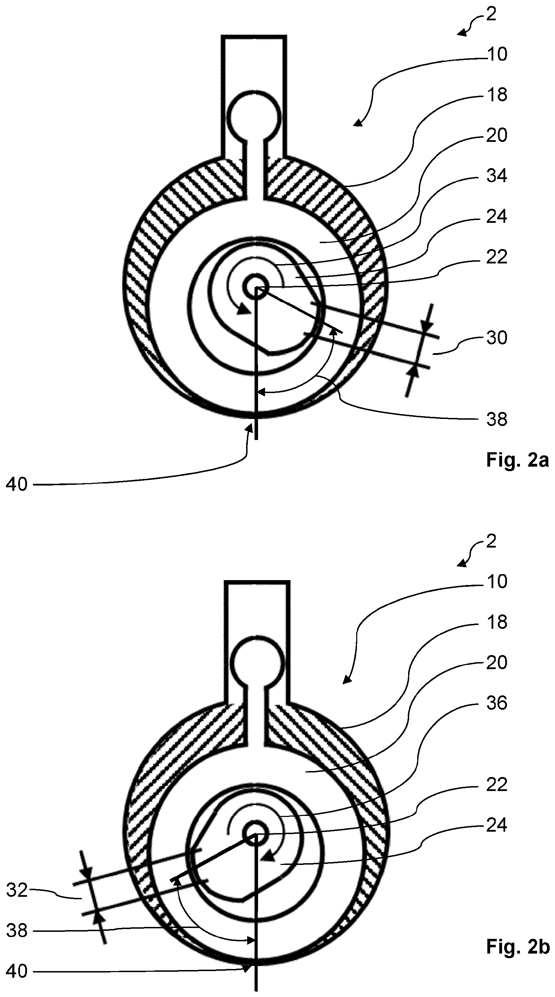

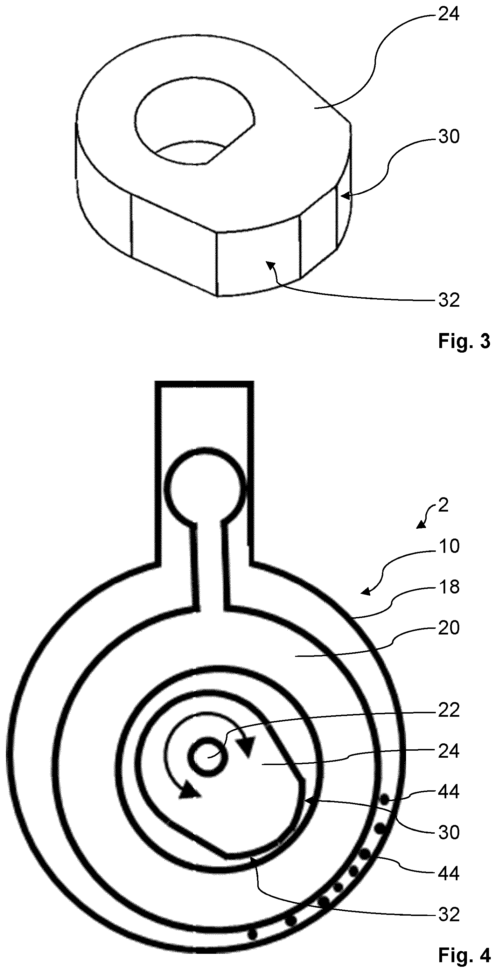

Die als Rollkolbenpumpe ausgebildete Pumpe 10 ist in den Fig. 2a bis 4 näher dargestellt. Die Pumpe 10 umfasst ein Gehäuse 18, einen in dem Gehäuse 18 bewegbar angeordneten Verdrängerkörper 20 zur Förderung eines zwischen dem Gehäuse 18 und dem Verdrängerkörper 20 befindlichen Fluids, beispielsweise des Wassers 14, und einen in dem Verdrängerkörper 20 um eine Rotationsachse 22 drehbar angeordneten und mittels des vorgenannten Antriebs der Pumpe 10 automatisch antreibbaren Exzenter 24. Die als Rollkolbenpumpe ausgebildete Pumpe 10 ist auch für ein trockenes ansaugen geeignet. Eine mit der Flüssigkeitsleitung 12 strömungsleitend verbundene Pumpenöffnung 26 und eine mit der Wasserzufuhrleitung 8 strömungsleitend verbundene Pumpenöffnung 28 der Pumpe 10 sind lediglich in den Fig. 1a bis 1c dargestellt. Die Rotationsachse 22 ist in den Fig. 2a, 2b und 4 senkrecht zu der jeweiligen Bildebene angeordnet.

Der Exzenter 24, der Verdrängerkörper 20 und das Gehäuse 18 sind bei dem vorliegenden Ausführungsbeispiel der Pumpe 10 jeweils aus einem Kunststoff ausgebildet. Hierfür ist es erforderlich, dass die Flächenpressungen zwischen dem Exzenter 24 auf der einen Seite und dem Verdrängerkörper 20 auf der anderen Seite sowie dem Verdrängerkörper 20 auf der einen Seite und dem Gehäuse 18 auf der anderen Seite im Betrieb der Pumpe 10 möglichst gering sind. Hierfür ist der Exzenter 24 der Pumpe 10 als ein in einem Schnitt senkrecht zur Rotationsachse 22 nicht kreisförmiger Exzenter 24 ausgebildet, wobei der Exzenter 24 in diesem Schnitt nockenartig ausgebildet ist, nämlich derart, dass der Exzenter 24 in diesem Schnitt eine erste Kontaktfläche 30 und eine von der ersten Kontaktfläche 30 beabstandete zweite Kontaktfläche 32 aufweist, wobei der Exzenter 24 derart ausgebildet ist, dass der Exzenter 24 in einer ersten Drehrichtung lediglich mit der ersten Kontaktfläche 30 und in einer zweiten Drehrichtung lediglich mit der zweiten Kontaktfläche 32 mit dem Verdrängerkörper 20 in Kraftübertragungskontakt ist. Siehe hierzu die Fig. 2a und 2b, in denen die erste Drehrichtung durch einen Pfeil 34 und die zweite Drehrichtung durch einen Pfeil 36 dargestellt sind. Die erste und die zweite Kontaktfläche 30, 32 sind jeweils derart dimensioniert, dass eine Flächenpressung zwischen dem Exzenter 24 und dem Verdrängerkörper 20 in beiden Drehrichtungen 34, 36 des Exzenters 24 in Abhängigkeit der zwischen dem Exzenter 24 und dem Verdrängerkörper 20 zu übertragenden Kraft und in Abhängigkeit der Dimensionierung der Pumpe 10 minimiert ist.

Ferner sind der Exzenter 24, der Verdrängerkörper 20 und das Gehäuse 18 derart aufeinander abgestimmt dimensioniert, dass der Exzenter 24 mit einem vorher festgelegten Spiel relativ zu dem Verdrängerkörper 20 drehbar ist. Hierfür ist die Pumpe 10 derart ausgebildet, dass bei einer Drehung des Exzenters 24 ein Kraftübertragungskontakt zwischen dem Exzenter 24 und dem Verdrängerkörper 20 im Vergleich zu einem Kraftübertragungskontakt zwischen dem Verdrängerkörper 20 und dem Gehäuse 18, bezogen auf eine Drehrichtung 34, 36 der Drehung, um einen Vorlaufwinkel 38 vorlaufend ist, bevorzugt, dass der Vorlaufwinkel 38 einen Wert von größer 0° und kleiner 90°, besonders bevorzugt, dass der Vorlaufwinkel 38 einen Wert von größer 50° und kleiner 70°aufweist. Bei dem vorliegenden Ausführungsbeispiel weist der Vorlaufwinkel 38 einen Wert von etwa 60° auf. Der Kraftübertragungskontakt des Verdrängerkörpers 20 mit dem Gehäuse 18 ist in den Fig. 2a und 2b mit dem Bezugszeichen 40 bezeichnet. Der Vorlaufwinkel 38 ist in den Fig. 2a und 2b jeweils zwischen einer Linie von der Rotationsachse 22 zu diesem Kraftübertragungskontakt 40 und einer Linie von der Rotationsachse 22 zu einer Mitte der jeweiligen Kontaktfläche 30, 32 des Exzenters 24 eingeschlossen. Der vorgenannte Kraftübertragungskontakt zwischen dem Exzenter 24 und dem Verdrängerkörper 20 auf der einen Seite und der vorgenannte Kraftübertragungskontakt zwischen dem Verdrängerkörper 20 und dem Gehäuse 18 auf der anderen Seite sind derart zueinander positioniert, dass eine Spaltströmung des Fluids, beispielsweise des Wassers 14, zwischen dem Gehäuse 18 und dem Verdrängerkörper 20 minimiert ist.

Nachfolgend wird die Funktionsweise des erfindungsgemäßen flüssigkeitsführenden Geräts mit der erfindungsgemäßen Pumpe gemäß dem ersten Ausführungsbeispiel und anhand der Fig. 1a bis 4 näher erläutert.

Ein nicht dargestellter Benutzer stellt ein nicht dargestelltes Gargut in die Backmuffel des als Backofen ausgebildeten flüssigkeitsführenden Geräts 2 ein und wählt mittels einer nicht dargestellten Benutzerschnittstelle des Backofens 2 ein Programm für den Betrieb des Backofens 2, beispielsweise Klimagaren, aus. Der Benutzer wird mittels der Benutzerschnittstelle dazu aufgefordert, die Tasse 16 mit Wasser 14 in strömungsleitender Verbindung zu der Wasserleitung 12 anzuordnen. Da die Tasse 16 lediglich in der Fig. 1c abgebildet ist, wird hier auf diese Fig. 1c verwiesen. Analog dazu ist die Tasse 16 mit dem Wasser 14 bei einem Befüllen des Vorlagebehälters 6 mit Wasser 14 angeordnet. Nachdem die Steuerung des Backofens 2 beispielsweise auf dem Fachmann bekannte Weise erkannt hat, dass die Tasse 16 mit Wasser 14 in strömungsleitender Verbindung zu der Wasserleitung 12 angeordnet worden ist, überführt die Steuerung den Elektromotor der Pumpe 10 automatisch in einen ersten Betriebsmodus. In dem ersten Betriebsmodus wird der Elektromotor der Pumpe 10 zur Förderung des Wassers 14 von der Wasserleitung 12 und damit von der Tasse 16 mit dem Wasser 14 zu dem Vorlagebehälter 6 des Verdampfers 4 angesteuert. Der Exzenter 24 der Pumpe 10 dreht sich in der Bildebene von Fig. 2a links herum um die Rotationsachse 22, also gegen den Uhrzeigersinn. Das Wasser 14 gelangt durch die Pumpenöffnung 26 in die Pumpe 10 und verlässt die Pumpe 10 durch die Pumpenöffnung 28. Hierbei ist lediglich die erste Kontaktfläche 30 des Exzenters 24 in Kontakt mit dem Verdrängerkörper 20.

Das Wasser 14 aus der Tasse 16 gelangt somit mittels der Wasserleitung 12, der Pumpe 10 und der Wasserzufuhrleitung 8 in den Vorlagebehälter 6 des Verdampfers 4 und wird in dem Vorlagebehälter 6 des Verdampfers 4 mittels der Heizung 7 beheizt und zumindest teilweise verdampft. Ein dadurch in dem Vorlagebehälter 6 entstandener Wasserdampf 42 strömt mittels der nicht dargestellten Dampfleitung in die ebenfalls nicht dargestellte Backmuffel. Die Verdampfung des in dem Vorlagebehälter 6 befindlichen Wassers 14 wird mittels der Steuerung gesteuert oder geregelt. Dies erfolgt beispielsweise in Abhängigkeit eines Programmablaufs und/oder einer Messung mindestens einer Messgröße an oder in dem flüssigkeitsführenden Gerät 2 und/oder in Abhängigkeit einer Benutzereingabe mittels der Benutzerschnittstelle des flüssigkeitsführenden Geräts 2.

In den Fig. 1a und 1b ist jeweils ein Betriebszustand des flüssigkeitsführenden Geräts 2 dargestellt, bei dem der Vorlagebehälter 6 mit Wasser 14 befüllt ist. Durch ein Verdampfen des in dem Vorlagebehälter 6 befindlichen Wassers 14 mittels der Heizung 7 des Verdampfers 4 kann es beispielsweise zu Druckschwankungen in dem Verdampfer 4 kommen. Diese Druckschwankungen und ein damit verbundenes Heben und Senken des Wassers 14 in der Wasserzufuhrleitung 8 kann mittels der siphonartig ausgebildeten Wasserzufuhrleitung 8 derart ausgeglichen werden, dass es zu keiner ungewünschten Rückströmung von Wasser 14 in die Pumpe 10 und damit in die Flüssigkeitsleitung 12 kommen kann. Hierfür ist ein vorher festgelegter Höhenunterschied von einem in der Wasserzufuhrleitung 8 gegebenen Wasserspiegel zu einem in dem Vorlagebehälter 6 gegebenen Wasserspiegel entsprechend konstruktiv festgelegt und realisiert.

Sofern nicht das gesamte in dem Vorlagebehälter 6 befindliche Wasser 14 verdampft worden ist, beispielsweise weil bei dem konkret ausgewählten Programm für den Backofen 2 im Vergleich zu der mittels der in dem Vorlagebehälter 6 befindlichen Menge an Wasser 14 möglichen Menge an Wasserdampf 42 eine geringere Menge an Wasserdampf 42 erforderlich gewesen ist, kann dieser Rest an in dem Vorlagebehälter 6 befindlichen Wasser 14 mittels der Pumpe 10 von dem Vorlagebehälter 6 des Verdampfers 4 via der Wasserleitung 12 zurück in die Tasse 16 gefördert werden. Siehe hierzu die Fig. 1c.

Der Rest an in dem Vorlagebehälter 6 befindlichen Wasser 14 wird beispielsweise mittels geeigneter Sensorik von der Steuerung erfasst, wodurch die Steuerung den Elektromotor der Pumpe 10 automatisch in dessen zweiten Betriebsmodus überführt. In dem zweiten Betriebsmodus des Elektromotors wird der Rest an in dem Vorlagebehälter 6 befindlichen Wasser 14 mittels der Wasserzufuhrleitung 8, der Pumpe 10 und der Flüssigkeitsleitung 12 zurück in die Tasse 16 gefördert. Hierfür steuert die Steuerung den Elektromotor der Pumpe 10 derart an, dass sich der Exzenter 24 der Pumpe 10 in der Bildebene von Fig. 2b rechts herum um die Rotationsachse 22 dreht, also im Uhrzeigersinn. Das Wasser 14 gelangt durch die Pumpenöffnung 28 in die Pumpe 10 und verlässt die Pumpe 10 durch die Pumpenöffnung 26. Hierbei ist lediglich die zweite Kontaktfläche 32 des Exzenters 24 in Kontakt mit dem Verdrängerkörper 20.

Sobald die Steuerung, beispielsweise mittels der oben genannten Sensorik, erkennt, dass sich in dem Vorlagebehälter 6 kein Wasser 14 mehr befindet, schaltet die Steuerung den Elektromotor und damit die Pumpe 10 aus. Eine entsprechende Erledigungsmeldung wird mittels der Benutzerschnittstelle an den Benutzer ausgegeben. Der Benutzer kann die Tasse 16 mit dem Rest an Wasser 14, das aus dem Vorlagebehälter 6 des Verdampfers 4 zurück in die Tasse 16 gefördert worden ist, von dem Backofen 2 entfernen und beispielsweise in einen nicht dargestellten, separaten Ausguss entleeren.

Alternativ oder zusätzlich zu dem vorgenannten Abpumpen von in dem Vorlagebehälter 6 befindlichen Restwasser ist es darüber hinaus möglich, dass mittels eines Entkalkungsvorgangs gelöster Kalk 44 mittels des Wassers 14 aus dem Vorlagebehälter 6 auf die vorgenannte Art und Weise abgepumpt wird. Siehe hierzu ebenfalls die Fig. 1c.

Aufgrund der Möglichkeit, mittels der Pumpe 10 Flüssigkeit, beispielsweise das Wasser 14, sowohl von der Flüssigkeitsleitung 12 und/oder einem mit der Flüssigkeitsleitung 12 strömungsleitend verbundenen Flüssigkeitsreservoir 16 zu dem Vorlagebehälter 6 wie auch in die Gegenrichtung, also von dem Vorlagebehälter 6 zu der Flüssigkeitsleitung 12 und damit zu dem Flüssigkeitsreservoir 16, zu fördern, ist der konstruktive Aufbau des flüssigkeitsführenden Geräts 2 vereinfacht. Ferner ist das flüssigkeitsführende Gerät 2 durch den Verzicht auf beispielsweise eine zusätzliche Pumpe für die Förderung in die Gegenrichtung platzsparend und damit kompakt und kostengünstig realisierbar. Anderenfalls wäre es, wie im Stand der Technik üblich, lediglich möglich, die in dem Vorlagebehälter befindliche Flüssigkeit, beispielsweise Restwasser, in zusätzlichen Prozessschritten eines nicht erfindungsgemäßen flüssigkeitsführenden Geräts vollständig zu verdampfen oder in den Behandlungsraum zu fördern und dann entweder zu verdampfen oder über eine in dem Behandlungsraum vorhandene Ablauföffnung aus diesem flüssigkeitsführenden Gerät auszuschleusen. Darüber hinaus ist es mittels des flüssigkeitsführenden Geräts 2 möglich, in dem Vorlagebehälter 12 befindliche Flüssigkeit, beispielsweise Restwasser 14 oder Flüssigkeit zur Durchführung eines Entkalkungsvorgangs in dem flüssigkeitsführenden Gerät 2, mittels der Pumpe 10 im Wesentlichen vollständig aus dem Vorlagebehälter 6 abzupumpen. Entsprechend ist es auch möglich, bei dem vorgenannten Entkalkungsvorgang gelöste Kalkpartikel 44 auf dem vorgenannten Weg, also lediglich mittels der Pumpe 10 und damit ohne zusätzliche Maßnahmen, aus dem flüssigkeitsführenden Gerät 2 im Wesentlichen vollständig auszuschleusen.

Somit ist eine zusätzliche aber für den Garvorgang nicht erforderliche Verdampfung dieses noch in dem Vorlagebehälter 6 befindlichen Restes an Wasser 14 nicht erforderlich, wie dies bei diversen Ausführungsformen aus dem Stand der Technik im Nachgang zu dem Garvorgang, also nach Garprozessende, durchgeführt wird. Entsprechend lassen sich Zeit, Energie und damit Kosten einsparen.

Die Erfindung ist nicht auf das vorliegende Ausführungsbeispiel beschränkt. Beispielsweise ist die Erfindung auch bei anderen Geräten zum Zubereiten von Speisen und/oder Getränken vorteilhaft einsetzbar. Neben Geräten für die Zubereitung von Speisen und/oder Getränken, wie beispielsweise Kaffeemaschinen, sind auch Reinigungsgeräte, wie beispielsweise Waschmaschinen oder Spülmaschinen, denkbar. Das flüssigkeitsführende Gerät zum Zubereiten von Speisen und/oder Getränken oder zum Reinigen eines zu reinigenden Gutes kann als ein Haushaltsgerät oder als ein Gerät für die professionelle Verwendung ausgebildet sein.

Auch die Flüssigkeit ist in weiten geeigneten Grenzen frei wählbar. Beispielsweise kann es sich nicht nur um Wasser, sondern insbesondere auch um wasserbasierte Flüssigkeiten und Flüssigkeitsgemische handeln. Denkbar sind jedoch auch Flüssigkeiten mit einem gewissen Anteil von Feststoffen oder Gasen. Die Flüssigkeit, beispielsweise das Wasser, muss auch nicht zwingend in einem Verdampfer verdampft werden, bevor es in einen Behandlungsraum eines erfindungsgemäßen flüssigkeitsführenden Geräts eingeleitet wird. In anderen Ausführungsformen, beispielsweise in anderen Ausführungsformen eines erfindungsgemäßen Backofens, kann die Flüssigkeit, beispielsweise das Wasser, aus dem Vorlagebehälter ohne eine weitere Behandlung der Flüssigkeit, beispielsweise Verdampfen, Vermischen mit einer anderen Flüssigkeit und/oder einem Feststoff und/oder einem Gas oder dergleichen, in einen Behandlungsraum eines erfindungsgemäßen flüssigkeitsführenden Geräts eingeleitet werden.

Anstelle eines separaten Flüssigkeitsreservoirs kann beispielsweise auch mindestens ein Flüssigkeitsfestanschluss vorgesehen sein. So kann die Flüssigkeitsleitung zur Förderung von Flüssigkeit in den Vorlagebehälter zum einen mit einem Flüssigkeitsfestanschluss und zum anderen mit einer Flüssigkeitsableitung für von dem Vorlagebehälter zu der Flüssigkeitsleitung zurück geförderter Flüssigkeit strömungsleitend verbunden sein. Beispielsweise könnte zwischen der Flüssigkeitsleitung auf der einen Seite sowie dem Flüssigkeitsfestanschluss und der Flüssigkeitsableitung auf der anderen Seite mittels eines Umschaltmittels, beispielsweise ein Ventil oder dergleichen, umgeschaltet werden. Denkbar ist auch, dass ein derartiges Umschaltmittel in der Pumpe integriert ist. In dem letztgenannten Fall würde die Pumpe dann sowohl eine flüssigkeitsleitungsseitige Pumpenöffnung für den Flüssigkeitsfestanschluss wie auch eine weitere flüssigkeitsleitungsseitige Pumpenöffnung für die Flüssigkeitsableitung aufweisen. Auch eine Kombination von beispielsweise einem separaten Flüssigkeitsreservoir und einem Festanschluss für die Ableitung der aus dem Vorlagebehälter zurück geförderten Flüssigkeit ist möglich. Natürlich könnte das Flüssigkeitsreservoir auch in das Gerät integriert sein.

## Patentansprüche

1. Pumpe (10) für ein flüssigkeitsführendes Gerät (2) zum Zubereiten von Speisen und/oder Getränken oder zum Reinigen eines zu reinigenden Gutes wobei die Pumpe (10) als eine Rollkolbenpumpe ausgebildet ist, umfassend ein Gehäuse (18), einen in dem Gehäuse (18) bewegbar angeordneten Verdrängerkörper (20) zur Förderung eines zwischen dem Gehäuse (18) und dem Verdrängerkörper (20) befindlichen Fluids und einen in dem Verdrängerkörper (20) um eine Rotationsachse (22) drehbar angeordneten und mittels eines Antriebs der Pumpe (10) automatisch antreibbaren Exzenter (24),
**dadurch gekennzeichnet,**
**dass** der Exzenter (24) der Pumpe (10) als ein in einem Schnitt senkrecht zur Rotationsachse (22) nicht kreisförmiger Exzenter (24) ausgebildet ist.

2. Pumpe (10) nach Anspruch 1,
**dadurch gekennzeichnet,**
**dass** der Exzenter (24) in diesem Schnitt eine erste Kontaktfläche (30) und eine von der ersten Kontaktfläche (30) beabstandete zweite Kontaktfläche (32) aufweist, wobei der Exzenter (24) derart ausgebildet ist, dass der Exzenter (24) in einer ersten Drehrichtung (34) lediglich mit der ersten Kontaktfläche (30) und in einer zweiten Drehrichtung (36) lediglich mit der zweiten Kontaktfläche (32) mit dem Verdrängerkörper (20) in Kraftübertragungskontakt ist.

3. Pumpe (10) nach Anspruch 1 oder 2, **dadurch gekennzeichnet, dass** der Antrieb der Pumpe (10) als ein mittels der Steuerung des flüssigkeitsführenden Geräts (2) ansteuerbarer bürstenloser Antrieb ausgebildet ist.

4. Pumpe (10) nach Anspruch 3 oder 4, **dadurch gekennzeichnet, dass** die Pumpe (10) derart ausgebildet ist, dass die Pumpe (10) trocken ansaugen kann.

5. Pumpe (10) nach einem der Ansprüche 3 bis 5, **dadurch gekennzeichnet, dass** die Pumpe (10) zumindest teilweise aus Kunststoff ausgebildet ist, bevorzugt, dass der Exzenter (24) und/oder der Verdrängerkörper (20) und/oder das Gehäuse (18) aus Kunststoff ausgebildet sind/ist.

6. Pumpe (10) nach Anspruch 2 und einem der Ansprüche 3 bis 5, , **dadurch gekennzeichnet, dass** die erste und die zweite Kontaktfläche (30, 32) jeweils derart dimensioniert sind, dass eine Flächenpressung zwischen dem Exzenter (24) und dem Verdrängerkörper (20) in beiden Drehrichtungen (34, 36) des Exzenters (24) in Abhängigkeit der zwischen dem Exzenter (24) und dem Verdrängerkörper (20) zu übertragenden Kraft und in Abhängigkeit der Dimensionierung der Pumpe (10) minimiert ist.

7. Pumpe (10) nach einem der Ansprüche 1 bis 6, **dadurch gekennzeichnet, dass** der Exzenter (24), der Verdrängerkörper (20) und das Gehäuse (18) derart aufeinander abgestimmt dimensioniert sind, dass der Exzenter (24) mit einem vorher festgelegten Spiel relativ zu dem Verdrängerkörper (20) drehbar ist.

8. Pumpe (10) nach Anspruch 7, **dadurch gekennzeichnet, dass** die Pumpe (10) derart ausgebildet ist, dass bei einer Drehung des Exzenters (24) ein Kraftübertragungskontakt zwischen dem Exzenter (24) und dem Verdrängerkörper (20) im Vergleich zu einem Kraftübertragungskontakt zwischen dem Verdrängerkörper (20) und dem Gehäuse (18), bezogen auf eine Drehrichtung (34, 36) der Drehung, um einen Vorlaufwinkel (38) vorlaufend ist, bevorzugt, dass der Vorlaufwinkel (38) einen Wert von größer 0° und kleiner 90°, besonders bevorzugt, dass der Vorlaufwinkel (38) einen Wert von größer 50° und kleiner 70° aufweist.

9. Pumpe (10) nach Anspruch 8, **dadurch gekennzeichnet, dass** der vorgenannte Kraftübertragungskontakt zwischen dem Exzenter (24) und dem Verdrängerkörper (20) auf der einen Seite und der vorgenannte Kraftübertragungskontakt zwischen dem Verdrängerkörper (20) und dem Gehäuse (18) auf der anderen Seite derart zueinander positioniert sind, dass eine Spaltströmung des Fluids zwischen dem Gehäuse (18) und dem Verdrängerkörper (20) minimiert ist.

10. Flüssigkeitsführendes Gerät (2) zum Zubereiten von Speisen und/oder Getränken oder zum Reinigen eines zu reinigenden Gutes, umfassend eine Flüssigkeitsleitung (12), einen Vorlagebehälter (6), einen mit dem Vorlagebehälter (6) strömungsleitend verbundenen Behandlungsraum und eine mittels einer Steuerung des flüssigkeitsführenden Geräts (2) ansteuerbare Pumpe (10) gemäße einem der Ansprüche 1 bis 9, wobei die Flüssigkeitsleitung (12) und der Vorlagebehälter (6) jeweils mit der Pumpe (10) strömungsleitend verbunden sind, und wobei die Pumpe (10) einerseits zur Förderung von in der Flüssigkeitsleitung (12) und/oder in einem mit der Flüssigkeitsleitung (12) strömungsleitend verbundenen Flüssigkeitsreservoir (16) befindlicher Flüssigkeit (14) zu dem Vorlagebehälter (6) und andererseits zur Förderung von in dem Vorlagebehälter (6) befindlicher Flüssigkeit zu der Flüssigkeitsleitung (12) oder dem Flüssigkeitsreservoir (16) ausgebildet ist, **dadurch gekennzeichnet, dass** die Pumpe (10) derart mit einem Bodenbereich des Vorlagebehälters (6) strömungsleitend verbunden ist, dass in dem Vorlagebehälter (6) befindliche Flüssigkeit (14) mittels der Pumpe (10) im Wesentlichen vollständig aus dem Vorlagebehälter (6) abpumpbar ist.

11. Flüssigkeitsführendes Gerät (2) nach Anspruch 10, **dadurch gekennzeichnet, dass** die Pumpe (10) oberhalb des Vorlagebehälters (6) angeordnet ist, bevorzugt, dass die strömungsleitende Verbindung (8) zwischen der Pumpe (10) und dem Vorlagebehälter (6) siphonartig ausgebildet ist, besonders bevorzugt, dass die vorgenannte strömungsleitende Verbindung (8) derart ausgebildet ist, dass deren Siphonfunktion in jedem Betriebszustand des flüssigkeitsführenden Geräts (2) gewährleistet ist.

## Claims

1. Pump (10) for a fluid-conducting device (2) for preparing food and/or beverages or for cleaning an item to be cleaned, the pump (10) being designed as a rotary piston pump, which pump comprises a housing (18), a displacer body (20) movably arranged in the housing (18) for conveying a fluid located between the housing (18) and the displacer body (20), and an eccentric (24) arranged in the displacer body (20) so as to be rotatable about a rotation axis (22) and automatically drivable by means of a drive of the pump (10), **characterised in that** the eccentric (24) of the pump (10) is designed as an eccentric (24) which is not circular in a section perpendicular to the rotation axis (22).

2. Pump (10) according to claim 1,
**characterised in that**
the eccentric (24) in this section has a first contact surface (30) and a second contact surface (32) spaced apart from the first contact surface (30), the eccentric (24) being designed such that the eccentric (24) is in force-transmitting contact with the displacer body (20) in a first rotation direction (34) only by the first contact surface (30) and in a second rotation direction (36) only by the second contact surface (32).

3. Pump (10) according to claim 1 or 2, **characterised in that** the drive of the pump (10) is designed as a brushless drive that can be controlled by means of the controller of the fluid-conducting device (2).

4. Pump (10) according to claim 3 or 4, **characterised in that** the pump (10) is designed such that the pump (10) can suction dry.

5. Pump (10) according to any of claims 3 to 5, **characterised in that** the pump (10) is at least partially made of plastics material, preferably **in that** the eccentric (24) and/or the displacer body (20) and/or the housing (18) are/is made of plastics material.

6. Pump (10) according to claim 2 and any of claims 3 to 5,
**characterised in that** the first and the second contact surface (30, 32) are each dimensioned such that a surface pressure between the eccentric (24) and the displacer body (20) is minimised in both rotation directions (34, 36) of the eccentric (24) depending on the force to be transmitted between the eccentric (24) and the displacer body (20) and depending on the dimensioning of the pump (10).

7. Pump (10) according to any of claims 1 to 6, **characterised in that** the eccentric (24), the displacer body (20) and the housing (18) are dimensioned to match one another in such a way that the eccentric (24) can be rotated relative to the displacer body (20) with a predetermined clearance.

8. Pump (10) according to claim 7, **characterised in that** the pump (10) is designed such that, when the eccentric (24) rotates, a force transmission contact between the eccentric (24) and the displacer body (20), compared to a force transmission contact between the displacer body (20) and the housing (18), based on a rotation direction (34, 36) of the rotation, is advanced about a leading angle (38) preferably **in that** the leading angle (38) has a value greater than 0° and less than 90°, particularly preferably **in that** the leading angle (38) has a value greater than 50° and less than 70°.

9. Pump (10) according to claim 8, **characterised in that** the aforementioned force transmission contact between the eccentric (24) and the displacer body (20) and the aforementioned force transmission contact between the displacer body (20) and the housing (18) are positioned relative to one another such that a gap flow of the fluid between the housing (18) and the displacer body (20) is minimised.

10. Fluid-conducting device (2) for preparing food and/or beverages or for cleaning an item to be cleaned, comprising a fluid line (12), a storage container (6), a treatment chamber fluidically connected to the storage container (6), and a pump (10) controllable by means of a controller of the fluid-conducting device (2), according to any of claims 1 to 9, the fluid line (12) and the storage container (6) each being fluidically connected to the pump (10), and the pump (10) being designed to convey fluid (14) located in the fluid line (12) and/or in a fluid reservoir (16) fluidically connected to the fluid line (12) to the storage container (6) and also to convey fluid located in the storage container (6) to the fluid line (12) or the fluid reservoir (16), **characterised in that** the pump (10) is fluidically connected to a bottom region of the storage container (6) such that fluid (14) located in the storage container (6) can be pumped out substantially completely from the storage container (6) by means of the pump (10).

11. Fluid-conducting device (2) according to claim 10, **characterised in that** the pump (10) is arranged above the storage container (6), preferably **in that** the fluidic connection (8) between the pump (10) and the storage container (6) is designed in a siphon-like manner, particularly preferably **in that** the aforementioned fluidic connection (8) is designed in such a way that its siphon function is ensured in any operating state of the fluid-conducting device (2).

## Revendications

1. Pompe (10) pour un appareil conducteur de liquides (2) pour la préparation d'aliments et/ou de boissons ou pour le nettoyage d'un produit à nettoyer, dans laquelle la pompe (10) est réalisée comme une pompe à piston rotatif, comprenant un boîtier (18), un corps de refoulement (20) disposé de manière à pouvoir se déplacer dans le boîtier (18) pour le transport d'un fluide se trouvant entre le boîtier (18) et le corps de refoulement (20) et un excentrique (24) disposé dans le corps de refoulement (20) de manière à pouvoir tourner autour d'un axe de rotation (22) et pouvant être entraîné automatiquement au moyen d'un entraînement de la pompe (10), **caractérisée en ce que** l'excentrique (24) de la pompe (10) est réalisé comme un excentrique (24) non circulaire dans une coupe perpendiculairement à l'axe de rotation (22).

2. Pompe (10) selon la revendication 1,
**caractérisée en ce**
**que** l'excentrique (24) présente dans ladite coupe une première surface de contact (30) et une seconde surface de contact (32) espacée de la première surface de contact (30), dans laquelle l'excentrique (24) est réalisé de telle sorte que l'excentrique (24) est en contact avec transmission de force avec le corps de refoulement (20) uniquement par le biais de la première surface de contact (30) dans un premier sens de rotation (34) et uniquement par le biais de la seconde surface de contact (32) dans un second sens de rotation (36).

3. Pompe (10) selon la revendication 1 ou 2, **caractérisée en ce que** l'entraînement de la pompe (10) est réalisé comme un entraînement sans balais pouvant être commandé au moyen de la commande de l'appareil conducteur de liquides (2).

4. Pompe (10) selon la revendication 3 ou 4, **caractérisée en ce que** la pompe (10) est réalisée de telle sorte que la pompe (10) peut aspirer à sec.

5. Pompe (10) selon l'une des revendications 3 à 5, **caractérisée en ce que** la pompe (10) est réalisée au moins partiellement en matière plastique, de préférence **en ce que** l'excentrique (24) et/ou le corps de refoulement (20) et/ou le boîtier (18) sont réalisés en matière plastique.

6. Pompe (10) selon la revendication 2 et l'une des revendications 3 à 5,
**caractérisée en ce que** la première et la seconde surface de contact (30, 32) sont respectivement dimensionnées de telle sorte qu'une pression de surface entre l'excentrique (24) et le corps de refoulement (20) est minimisée dans les deux sens de rotation (34, 36) de l'excentrique (24) en fonction de la force à transmettre entre l'excentrique (24) et le corps de refoulement (20) et en fonction des dimensions de la pompe (10).

7. Pompe (10) selon l'une des revendications 1 à 6, **caractérisée en ce que** l'excentrique (24), le corps de refoulement (20) et le boîtier (18) sont dimensionnés de manière coordonnée de telle sorte que l'excentrique (24) peut tourner avec un jeu prédéfini par rapport au corps de refoulement (20).

8. Pompe (10) selon la revendication 7, **caractérisée en ce que** la pompe (10) est réalisée de telle sorte que, lors d'une rotation de l'excentrique (24), un contact avec transmission de force entre l'excentrique (24) et le corps de refoulement (20) est en avance par rapport à un contact avec transmission de force entre le corps de refoulement (20) et le boîtier (18), par rapport à un sens de rotation (34, 36) de la rotation, d'un angle d'avance (38), de préférence **en ce que** l'angle d'avance (38) présente une valeur supérieure à 0° et inférieure à 90°, de manière particulièrement préférée **en ce que** l'angle d'avance (38) présente une valeur supérieure à 50° et inférieure à 70°.

9. Pompe (10) selon la revendication 8, **caractérisée en ce que** le contact avec transmission de force précité entre l'excentrique (24) et le corps de refoulement (20) d'un côté et le contact avec transmission de force précité entre le corps de refoulement (20) et le boîtier (18) de l'autre côté sont positionnés l'un par rapport à l'autre de telle sorte qu'un écoulement interstitiel du fluide entre le boîtier (18) et le corps de refoulement (20) est minimisé.

10. Appareil conducteur de liquides (2) pour la préparation d'aliments et/ou de boissons ou pour le nettoyage d'un produit à nettoyer, comprenant une conduite pour liquide (12), un réservoir de stockage (6), une chambre de traitement reliée au réservoir de stockage (6) de manière à guider l'écoulement et une pompe (10) selon l'une des revendications 1 à 9 pouvant être commandée au moyen d'une commande de l'appareil conducteur de liquides (2), dans lequel la conduite pour liquide (12) et le réservoir de stockage (6) sont respectivement reliés à la pompe (10) de manière à guider l'écoulement, et dans lequel la pompe (10) est réalisée, d'une part, pour le transport vers le réservoir de stockage (6) de liquide (14) se trouvant dans la conduite pour liquide (12) et/ou dans un réservoir pour liquide (16) relié à la conduite pour liquide (12) de manière à guider l'écoulement, et, d'autre part, pour le transport vers la conduite pour liquide (12) ou le réservoir pour liquide (16) de liquide se trouvant dans le réservoir de stockage (6), **caractérisé en ce que** la pompe (10) est reliée à une zone de fond du récipient de stockage (6) de manière à guider l'écoulement de telle sorte que le liquide (14) se trouvant dans le récipient de stockage (6) peut être pompé sensiblement complètement hors du récipient de stockage (6) au moyen de la pompe (10).

11. Appareil conducteur de liquides (2) selon la revendication 10,
**caractérisé en ce que** la pompe (10) est disposée au-dessus du récipient de stockage (6), de préférence **en ce que** la liaison de guidage d'écoulement (8) entre la pompe (10) et le récipient de stockage (6) est réalisée à la manière d'un siphon, de manière particulièrement préférée, **en ce que** la liaison de guidage d'écoulement (8) précitée est réalisée de telle sorte que sa fonction de siphon est garantie dans chaque état de fonctionnement de l'appareil conducteur de liquides (2).
